# EUROPÄISCHE PATENTSCHRIFT

(11) **EP 1 106 896 B1**
(45) Veröffentlichungstag und Bekanntmachung des Hinweises auf die Patenterteilung: **13.10.2004**
(21) Anmeldenummer: 00123407.9
(22) Anmeldetag: 02.11.2000
(51) Int. Cl.: F16L 37/084

(54) **Steckverbindung für Druckmittelsysteme**
Plug coupling for pressure fluid systems
Raccord emboîtable pour systèmes à fluide sous pression

(30) Priorität: 06.12.1999 DE 29921405 U
(43) Veröffentlichungstag der Anmeldung: 13.06.2001
(73) Patentinhaber: Voss Automotive GmbH, 51688 Wipperfürth (DE)
(72) Erfinder: Hagen, Harald, 51688 Wipperfürth (DE); Salomon-Bahls, Bernd, 58553 Halver (DE)
(74) Vertreter: Zapf, Christoph, Dipl.-Ing.

(56) Entgegenhaltungen:
- EP-A- 0 287 791
- EP-A- 0 459 016
- EP-A- 0 545 337
- DE-A- 19 755 531

## Beschreibung

Die vorliegende Erfindung betrifft eine Steckverbindung gemäß dem Oberbegriff des Anspruchs 1.

Eine derartige Steckverbindung bzw. Steckkupplung ist in der EP 0 287 791 A2 beschrieben. Als Halteelement ist dabei ein Schiebe- und Haltering vorgesehen, der zunächst vor dem Einstecken auf dem Steckerteil sitzt. Dieser Haltering besteht aus einem Flansch mit sich axial erstreckenden und radial bewegbaren Federarmen. Beim Einstecken hintergreifen diese Federarme eine Ringstufe eines im Kupplungsgehäuse sitzenden Hilfsringes. Zum Lösen des Steckers weichen die Federarme mit ihren endseitigen Vorsprüngen radial nach außen in einen Freiraum der Gehäusebohrung aus, so dass beim Lösen des Steckers der Haltering im Gehäuse verbleibt. Er sitzt dann folglich nicht mehr verschiebbar auf dem Stecker. Um in der Sicherungsstellung die Lösebewegung der Federarme zu blockieren, ist im Gehäuse an dem eingesetzten Hiffsring ein "Sicherungsabschnitt" gebildet. Die Druckschrift beschreibt femer eine weitere Ausführungsform ohne Hilfsring, wobei ein Sicherungsabschnitt und ein Freiraum innerhalb der Gehäusebohrung gebildet sind. Auch hierbei verbleibt der Haltering beim Lösen des Steckers in der Gehäusebohrung.

Weitere Steckverbindungen sind seit langem in unterschiedlichen Variationen aus zahlreichen Veröffentlichungen bekannt. Lediglich beispielhaft sei hier die EP 0 005 865 B1 genannt.

Der vorliegenden Erfindung liegt die Aufgabe zugrunde, eine weitere Ausführung einer solchen Steckverbindung zu schaffen, die sich durch einfache und wirtschaftliche Herstellung und Montage sowie durch gute Funktionalität und Handhabung auszeichnet.

Erfindungsgemäß wird dies durch die Merkmale des Anspruchs 1 erreicht. Vorteilhafte Weiterbildungen sind in den abhängigen Ansprüchen enthalten.

Anhand eines in der Zeichnung veranschaulichten, bevorzugten Ausführungsbeispiels soll die Erfindung genauer erläutert werden. Dabei zeigen:
- Fig. 1 bzw. 1a-1f: jeweils in Halb-Axialschnittdarstellung die erfindungsgemäße Steckverbindung in unterschiedlichen Stellungen während des Einsteckvorgangs,
- Fig. 2 bzw. 2a - 2d: weitere Halb-Axialschnittansichten der erfindungsgemäßen Steckverbindung in verschiedenen Stellungen während des Lösevorgangs.
- Fig. 3: eine gesonderte, vergrößerte Perspektivansicht des Halteelementes nach der Erfindung und
- Fig. 4: einen Axialschnitt des Halteelementes.

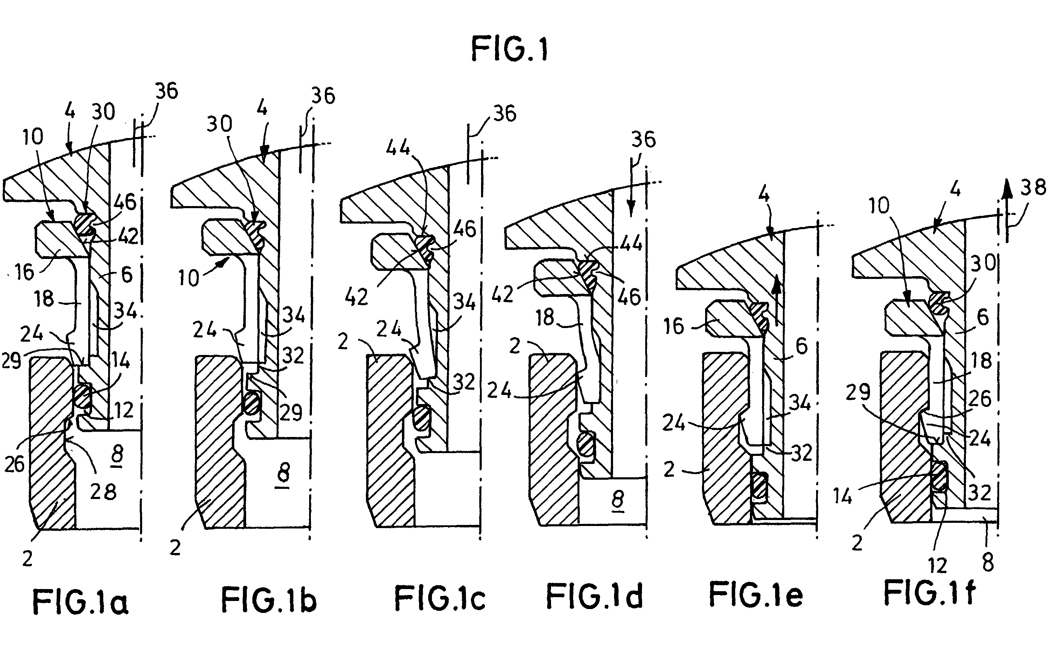

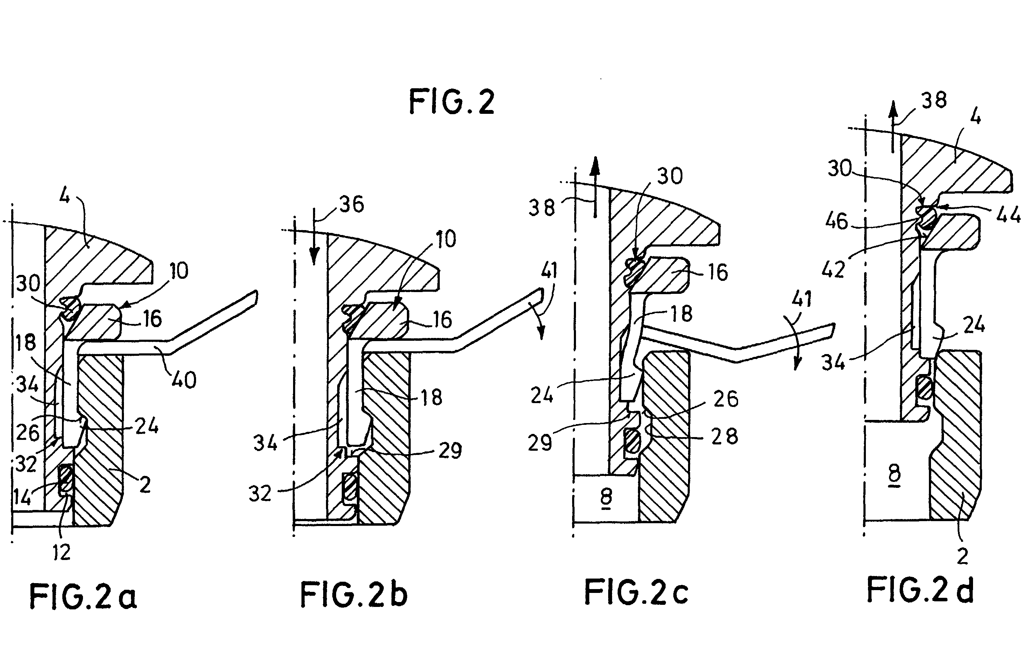

Gemäß Fig. 1 und 2 besteht eine erfindungsgemäße Steckverbindung aus einem Gehäuseteil 2 und einem Steckerteil 4. Das Steckerteil 4 ist mit einem Steckerschaft 6 dichtend in eine Aufnahmeöffnung 8 des Gehäuseteils 2 einsteckbar und mittels eines Halteleelementes 10 lösbar arretierbar. Zur Abdichtung trägt der Steckerschaft 6 in seinem freien Endbereich in einer äußeren Ringnut 12 einen Dichtring 14.

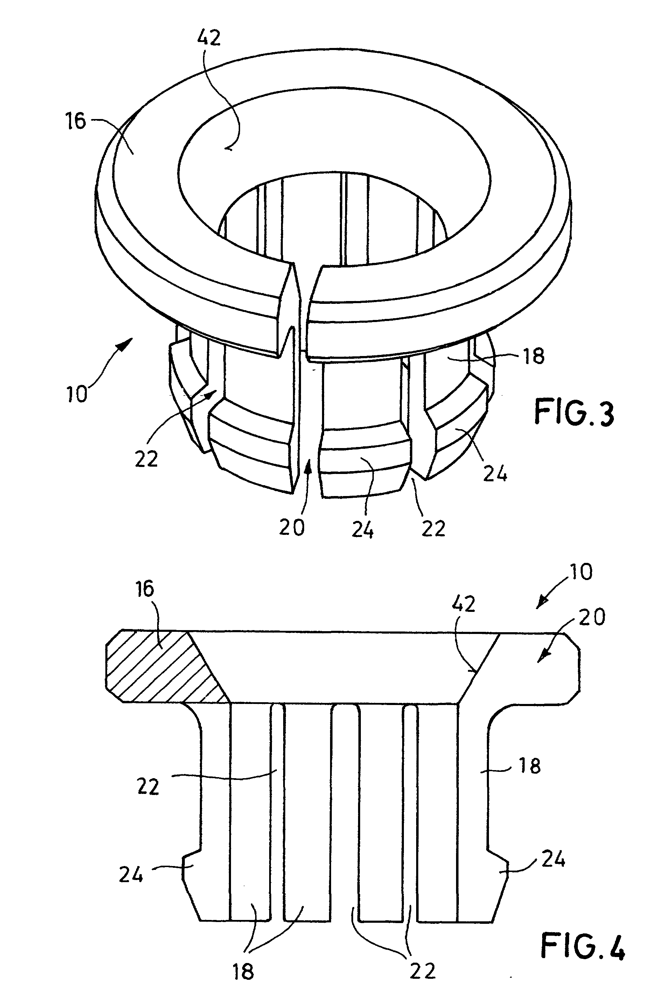

Das gesondert in den Fig. 3 und 4 dargestellte Halteelement 10 besteht aus einem Ringabschnitt 16 und damit einstückig verbundenen, sich axial erstreckenden und über den Umfang des Ringabschnittes 16 verteilt angeordneten, federelastischen Rastarmen 18. Im dargestellten Beispiel sind acht Rastarme 18 vorgesehen. Das Halteelement 10 weist an einer Stelle seines Umfanges einen axial und radial vollständig durchgehenden Schlitz 20 sowie jeweils zwischen den Rastarmen 18 vom Ringabschnitt 16 ausgehende Schlitze 22 auf. Durch den durchgehenden Schlitz 20 ist das ganze Halteelement 10 elastisch aufweitbar, wodurch das Halteelement 10 auf den Steckerschaft 6 aufmontiert bzw. auch wieder demontiert werden kann. Durch die Schlitze 20 und 22 sind die Rastarme 18 mit ihren freien, vom Ringabschnitt 16 wegweisenden Enden in radialer Richtung elastisch beweglich.

Das Halteelement 10 sitzt derart auf dem Steckerschaft 6, daß letzterer zusammen mit den Rastarmen 18 axial in die Aufnahmeöffnung 8 einsteckbar ist. In der eingesteckten Stellung (vgl. Fig. 1e, f und Fig. 2a, b) bleibt der Ringabschnitt 16 als Betätigungselement für das Halteelement 10 außerhalb der Aufnahmeöffnung 8.

Die Rastarme 18 weisen an ihren freien Enden radial nach außen weisende Haltevorsprünge 24 auf, die in der eingesteckten Arretierstellung eine innere, die Aufnahmeöffnung 8 erweiterende Ringstufe 26 hintergreifen. Vorzugsweise ist die Ringstufe 26 als Flanke einer inneren Ringnut 28 gebildet. Außerdem weist der Steckerschaft 6 eine radiale Ringstufe 29 auf, die sich in der Arretierstellung axial an den freien Enden der Rastarme 18 gegen Lösen abstützt.

Das Halteelement 10 ist in axialer Richtung verschiebbar auf dem Steckerschaft 6 angeordnet, und zwar zwischen einer Sicherungsstellung (Fig. 1a, 1f, 2a und 2d) und einer Freigabestellung (Fig. 1b - 1e und Fig. 2b, c). Zwischen dem Steckerteil 4 und dem verschiebbaren Halteelement 10 ist ein Federelement 30 derart angeordnet, daß das Halteelement 10 selbsttätig in seine Sicherungsstellung gebracht wird, aber zwangsweise relativ zum Steckerteil 4 aus der Sicherungsstellung gegen Federkraft in einer der Löse- bzw. Herausziehrichtung des Steckerteils 4 entsprechenden Richtung in die Freigabestellung bewegt werden kann. Das Federelement 30 kann mit Vorteil durch einen gummielastischen Ring gebildet sein, der die Federkraft erzeugt, wenn er durch die beschriebene Relativbewegung zwischen dem Steckerteil 4 und dem Halteelement 10 elastisch komprimiert wird.

Der Steckerschaft 6 weist einen Sicherungsabschnitt 32 auf, der in der Sicherungsstellung des Halteelementes 10 die freien Enden der Rastarme 18 gegen eine radial nach innen gerichtete Bewegung abstützt. In Löserichtung gesehen schließt sich an den Sicherungsabschnitt 32 ein durch eine Außendurchmesserreduzierung des Steckerschaftes 6 gebildeter Freiraum 34 an. Die axial gemessenen Längen der beschriebenen Komponenten und der Bewegungsbereich des Halteelementes 10 auf dem Steckerteil 4 sind erfindungsgemäß derart ausgelegt und aneinander angepaßt, daß die nachfolgend beschriebene Funktionsweise erreicht wird.

In Fig. 1 (1a - 1f) ist der Einsteckvorgang veranschaulicht. Beim Einstecken des Steckerschaftes 6 gelangt das Halteelement 10 im freien Endbereich der Rastarme 18 mit den Haltevorsprüngen 24 zur Anlage am Öffnungsrand der Aufnahmeöffnung des Gehäuseteils 2. Wird dann das Steckerteil 4 weiter in Pfeilrichtung 36 eingesteckt, so bewirkt dies eine relative Verschiebung des Halteelementes 10 gegen die Federkraft des Federelementes 30 derart, daß die freien Enden der Rastarme 18 von dem Sicherungsabschnitt 32 freikommen und in den angrenzenden Bereich des Freiraums 34 gelangen. Dadurch können sich nachfolgend die Rastarme 18 elastisch so verformen, daß ihre freien Enden radial nach innen in den Freiraum 34 aufweichen können und dann der Steckerschaft 6 zusammen mit dem Halteelement 10 und mit den Haltevorsprüngen 24 der Rastarme 18 weiter in Pfeilrichtung 36 eingesteckt werden kann (Fig. 1b - d). In der Folge rastet dann das Halteelement 10 ein, indem sich die Rastarme 18 elastisch radial nach außen bewegen und mit den Haltevorsprüngen 24 die innere Ringstufe 26 hintergreifen (Fig. 1e). Schließlich kommt es durch das Federelement 30 zu einer Rückverschiebung des Steckerschaftes 6 relativ zu dem Halteelement 10 in Löserichtung (Pfeil 38), wodurch die freien Enden der Rastarme 18 wieder durch den Sicherungsabschnitt 32 radial abgestützt und dadurch blockiert werden (Fig. 1f).

Ein nachfolgender Lösevorgang ist in Fig. 2 (2a -2d) dargestellt. Ausgehend von der Arretierstellung nach Fig. 2a (entspricht Fig. 1f) kann das Halteelement 10 über den als Betätigungselement fungierenden Ringabschnitt 16 und insbesondere unter Verwendung eines geeigneten Lösewerkzeugs 40 in der Stellung festgehalten werden, in der die Haltevorsprünge 24 etwa an der Ringstufe 26 anliegen. Dann kann das Steckerteil 4 gegen das Federelement 30 wieder in Pfeilrichtung 36 weiter relativ zum Halteelement 10 eingesteckt werden, wodurch die Rastarme 18 wieder von dem Sicherungsabschnitt 32 axial freikommen (Fig. 2b) und deshalb radial nach innen in den Freiraum 34 ausweichen können. Dies erfolgt, wenn das gesamte Steckerteil 4 gemäß Fig. 2c in Pfeilrichtung 38 herausgezogen wird, indem mittels des Lösewerkzeugs 40 das Halteelement 10 mit einer entsprechenden Lösekraft beaufschlagt wird. Dies kann durch eine hebelartige Bewegung des in einen Spalt zwischen das Gehäuseteil 2 und den Ringabschnitt 16 des Halteelementes 10 eingeführten Lösewerkzeugs 40 in Pfeilrichtung 41 erfolgen (vgl. Fig. 2 b und c). Indem die Haltevorsprünge 24 und die Ringstufe 26 über schräge, im Wesentlichen konische Wirkfläche zusammenwirken, wird durch die axiale Relativbewegung selbsttätig die radial nach innen gerichtete Ausweichbewegung der Rastarme 18 bewirkt, wobei die Haltevorsprünge 24 ganz von der Ringstufe 26 freikommen und das Steckerteil 4 in Pfeilrichtung 38 herausgezogen werden kann (Fig. 2d).

Abschließend sei noch erwähnt, daß im Anlagebereich des bevorzugt von einem elastischen Ring (z. B. O-Ring) gebildeten Federelementes 30 der Ringabschnitt 16 des Halteelementes 10 vorzugsweise eine konische Anlagefläche 42 aufweist, wobei das Steckerteil 4 eine axial gegenüberliegende Stützfläche 44 besitzt. Dabei kann es zudem vorteilhaft sein, wenn das gummielastische Federelement 30 radial nach innen von einem Ringansatz 46 des Steckerteils 4 bzw. des Steckerschaftes 6 abgestützt wird. Damit kann durch bestimmte Auslegung das Komprimierungs- und Federverhalten beeinflußt werden.

## Patentansprüche

1. Steckverbindung für Druckmittel-Leitungen, bestehend aus einem Gehäuseteil (2) und einem Steckerteil (4), wobei das Steckerteil (4) mit einem Steckerschaft (6) dichtend in eine Aufnahmeöffnung (8) des Gehäuseteils (2) einsteckbar und mittels eines Halteelementes (10) mit in radialer Richtung elastisch beweglichen Haltemittel (24) lösbar arretiert ist, indem das Halteelement (10) in einer Arretierstellung mit den Haltemitteln (24) zwischen einer inneren Ringstufe (26) in der Aufnahmeöffnung (8) und einer äußeren Ringstufe (29) des Steckerschaftes (6) sitzt, wobei das Halteelement (10) derart in axialer Richtung zwischen einer Sicherungsstellung und einer Freigabestellung verschiebbar auf dem Steckerschaft (6) sitzt, dass die Haltemittel (24) in der Sicherungsstellung gegen eine radiale Lösebewegung blockiert und in der Freigabestellung für eine radiale Lösebewegung freigegeben werden,
**dadurch gekennzeichnet, dass**
zwischen dem Steckerteil (4) und dem Halteelement (10) ein Federelement (30) derart angeordnet ist, dass das Halteelement (10) selbsttätig durch Federkraft in die Sicherungsstellung gebracht wird und gegen die Federkraft in die Freigabestellung bringbar ist.

2. Steckverbindung nach Anspruch 1,
**dadurch gekennzeichnet,**
**dass** das Halteelement (10) aus einem Ringabschnitt (16) und mit letzterem verbundenen, sich axial erstreckenden, federelastischen Rastarmen (18) besteht, wobei die Rastarme (18) an ihren freien, in Einsteckrichtung (36) weisenden Enden als Haltemittel radial nach außen weisende Haltevorsprünge (24) aufweisen.

3. Steckverbindung nach einem der Ansprüche 1 oder 2,
**dadurch gekennzeichnet,**
**dass** der Steckerschaft (6) einen Sicherungsabschnitt (32) aufweist, der in der Sicherungsstellung des Halteelementes (10) die Haltemittel (24) gegen eine radial nach innen gerichtete Bewegung abstützt.

4. Steckverbindung nach einem der Ansprüche 1 bis 3,
**dadurch gekennzeichnet,**
**dass** der Steckerschaft (6) einen durch eine Durchmesserreduzierung gebildeten, radialen, umfänglichen Freiraum (34) aufweist, in den die Haltemittel (24) in der Freigabestellung radial nach innen derart ausweichen können, daß der Steckerschaft (6) in die Aufnahmeöffnung (8) einsteckbar bzw. aus der Aufnahmeöffnung (8) herausziehbar ist.

5. Steckverbindung nach einem der Ansprüche 2 bis 4,
**dadurch gekennzeichnet,**
**dass** der Ringabschnitt (16) des Halteelementes (10) auch in der eingesteckten Kupplungslage als Betätigungsabschnitt außerhalb der Aufnahmeöffnung (8) angeordnet ist.

6. Steckverbindung nach einem der Ansprüche 2 bis 5,
**dadurch gekennzeichnet,**
**dass** das Halteelement (10) einen axial und radial durchgehenden Schlitz (20) sowie jeweils zwischen den - vorzugsweise gleichmäßig, radialsymmetrisch über den Umfang verteilt angeordneten - Rastarmen (18) von dem Bereich des Ringabschnittes (16) ausgehende Schlitze (22) aufweist.

7. Steckverbindung nach einem der Ansprüche 2 bis 6,
**dadurch gekennzeichnet,**
**dass** das Halteelement (10) vier bis zehn, insbesondere etwa acht Rastarme (18) aufweist.

8. Steckverbindung nach einem der Ansprüche 1 bis 7,
**dadurch gekennzeichnet,**
**dass** das Federelement (30) von einem gummielastischen Ring gebildet ist.

## Claims

1. Plug-in connection for pressure fluid lines, comprising a housing part (2) and a plug part (4), it being possible to insert a plug shaft (6) of the plug part (4) in a sealing manner in an accommodating opening (8) in the housing part (2), and the plug part (4) being arrested in a releasable fashion by means of a retaining element (10) having retaining means (24) which are elastically movable in the radial direction, by the retaining element (10) occupying an arresting position with the retaining means (24) between an inner annular step (26) in the accommodating opening (8) and an outer annular step (29) of the plug shaft (6), the retaining element (10) resting on the plug shaft (6) such that it is displaceable in the axial direction between a securing position and a releasing position such that the retaining means (24) are prevented from making a radial release movement in the securing position and are allowed to make a radial release movement in the releasing position, **characterized in that** a spring element (30) is arranged between the plug part (4) and the retaining element (10) such that the retaining element (10) is automatically brought into the securing position by spring force and can be brought into the releasing position against the spring force.

2. Plug-in connection according to Claim 1, **characterized in that** the retaining element (10) comprises an annular section (16) and axially extending, resilient latching arms (18) which are connected to said annular section (16) and have, on their free ends pointing in the insertion direction (36), radially outwardly pointing retaining projections (24) as the retaining means.

3. Plug-in connection according to either of Claims 1 and 2, **characterized in that** the plug shaft (6) has a securing section (32) which, in the securing position of the retaining element (10), supports the retaining means (24) so as to prevent a radially inward movement.

4. Plug-in connection according to one of Claims 1 to 3, **characterized in that** the plug shaft (6) has a radial, circumferential clearance (34) formed by a reduction in the diameter, in which the retaining means (24) can, in the releasing position, be deflected radially inwards such that the plug shaft (6) can be inserted in the accommodating opening (8) or can be withdrawn from the accommodating opening (8).

5. Plug-in connection according to one of Claims 2 to 4, **characterized in that** the annular section (16) of the retaining element (10) is arranged as an actuating section outside the accommodating opening (8), even in the inserted coupling position.

6. Plug-in connection according to one of Claims 2 to 5, **characterized in that** the retaining element (10) has an axially and radially continuous slot (20) and, between the latching arms (18) which are preferably arranged such that they are uniformly and radially symmetrically distributed over the circumference, slots (22) which in each case start from the region of the annular section (16).

7. Plug-in connection according to one of Claims 2 to 6, **characterized in that** the retaining element (10) has four to ten, in particular approximately eight latching arms (18).

8. Plug-in connection according to one of Claims 1 to 7, **characterized in that** the spring element (30) is in the form of an elastomeric ring.

## Revendications

1. Raccord emboîtable pour système à fluide sous pression, composé d'une partie boîtier (2) et d'une partie mâle (4), la partie mâle (4) pouvant être emmanchée à joint étanche par son manchon raccord (6) dans une ouverture de réception (8) de la partie boîtier (2) et étant arrêtée de façon séparable au moyen d'un élément de retenue (10) possédant des moyens de retenue (24) qui sont mobiles élastiquement dans la direction radiale, par le fait que, dans une position d'arrêt, l'élément de retenue (10) est appuyé par les moyens de retenue (24) entre une gorge annulaire intérieure (26) prévue dans l'ouverture de réception (8) et un épaulement annulaire extérieur (29) du manchon raccord (6), l'élément de retenue (10) étant monté sur le manchon raccord (6) de façon à pouvoir coulisser dans la direction axiale entre une position de maintien et une position de libération, en ce que, dans la position de maintien, les moyens de retenue (24) sont bloqués à l'encontre d'un mouvement radial de séparation, tandis que, dans la position de libération, ils sont libérés pour décrire un mouvement radial de séparation,
**caractérisé en ce qu'**un élément élastique (30) est disposé entre la partie mâle (4) et l'élément de retenue (10) de telle manière que l'élément de retenue (10) soit placé automatiquement dans la position de maintien par une force élastique et de manière qu'il puisse être placé dans la position de libération à l'encontre de la force élastique.

2. Raccord emboîtable selon la revendication 1,
**caractérisé en ce que** l'élément de retenue (10) est composé d'un segment annulaire (16) et de bras d'encliquetage (18) élastiques à la façon de ressorts, reliés à ce segment, s'étendant axialement, les bras d'encliquetage (18) présentant à leurs extrémités libres qui pointent dans la direction d'emmanchement (36) des saillies de retenue (24) pointant radialement vers l'extérieur, pour servir de moyens de retenue.

3. Raccord emboîtable selon une des revendications 1 ou 2,
**caractérisé en ce que** le manchon raccord (6) présente un segment de maintien (32) qui, dans la position de maintien de l'élément de retenue (10), donne appui aux moyens de retenue (24) en résistant à un mouvement dirigé radialement vers l'intérieur.

4. Raccord emboîtable selon une des revendications 1 à 3,
**caractérisé en ce que** le manchon raccord (6) présente un dégagement radial circonférentiel (34) formé par une réduction du diamètre, dans lequel, dans la position de libération, les moyens de retenue (24) peuvent s'infléchir radialement vers l'intérieur de telle manière que le manchon raccord (6) puisse être emmanché dans l'ouverture de réception (8) ou être extrait de l'ouverture de réception (8).

5. Raccord emboîtable selon une des revendications 2 à 4,
**caractérisé en ce que**,même dans la position d'accouplement emmanchée, le segment annulaire (16) de l'élément de retenue (10) est disposé en dehors de l'ouverture de réception (8) pour servir de segment d'actionnement.

6. Raccord emboîtable selon une des revendications 2 à 5,
**caractérisé en ce que** l'élément de retenue (10) présente une fente (20) continue dans la direction axiale et radiale, ainsi que des fentes (22) prévues entre les bras d'encliquetage (18) - de préférence réparties régulièrement avec une symétrie radiale sur la périphérie - et qui partent de la région du segment annulaire (16).

7. Raccord emboîtable selon une des revendications 2 à 6,
**caractérisé en ce que** l'élément de retenue (10) présente quatre à dix, en particulier environ huit, bras d'encliquetage (18).

8. Raccord emboîtable selon une des revendications 1 à 7,
**caractérisé en ce que** l'élément élastique (30) est formé d'une bague élastique à base de caoutchouc.
